Europäisches Patentamt

European Patent Office

Office européen des brevets

(19)

(11) Veröffentlichungsnummer: **0 196 471**
**B1**

(12) **EUROPÄISCHE PATENTSCHRIFT**

(45) Veröffentlichungstag der Patentschrift: **19.09.90**

(51) Int. Cl.⁵: **F 16 N 3/12,** F 16 N 5/00,
F 16 N 13/20

(21) Anmeldenummer: **86102703.5**

(22) Anmeldetag: **01.03.86**

(54) Hochdruckfördervorrichtung.

(30) Priorität: **02.04.85 CH 1418/85**

(43) Veröffentlichungstag der Anmeldung:
**08.10.86 Patentblatt 86/41**

(45) Bekanntmachung des Hinweises auf die
Patenterteilung:
**19.09.90 Patentblatt 90/38**

(84) Benannte Vertragsstaaten:
**AT BE CH DE FR GB IT LI LU NL SE**

(56) Entgegenhaltungen:
DE-A-2 553 454
DE-A-3 214 917
DE-B-1 001 553
DE-B-1 016 989
DE-B-1 017 865
DE-C- 903 764
FR-A-1 135 749
GB-A- 501 605
US-A-2 362 922
US-A-2 686 281
US-A-2 731 173
US-A-4 062 425

(73) Patentinhaber: **Abnox AG**
**Zugerstrasse 6**
**CH-6330 Cham (CH)**

(72) Erfinder: **Hürlimann, Hans**
**Haltlirainstrasse 11**
**CH-6318 Walchwil (CH)**
Erfinder: **Iseli, Werner**
**Rainweidstrasse 8**
**CH-6330 Cham (CH)**
Erfinder: **Wunderlin, Kurt**
**Enikerweg 9**
**CH-6330 Cham (CH)**

(74) Vertreter: **Quehl, Horst M., Dipl.-Ing.**
**Seestrasse 640 Postfach 90**
**CH-8706 Meilen/Zürich (CH)**

Courier Press, Leamington Spa, England.

## Beschreibung

Die Erfindung betrifft eine Hochdruckfördervorrichtung mit den Merkmalen des Oberbegriffs des Patentanspruchs 1.

Eine Vorrichtung dieser Art ist bekannt durch die US—A—2 362 922. Sie lässt sich nach Art einer Fasspumpe an einem vorhandenen Vorratsbehälter anbringen, um ohne Umfüllen aus diesem Behälter heraus fördern zu können. Die für diese Vorrichtung verwendete, in einem konischen Förderrohr angeordnete konische Förderspindel ist technisch besonders aufwendig und dennoch mit hohen Antriebsverlusten verbunden. Ausserdem eignet sich diese bekannte Vorrichtung nur für Medien geringerer Viskosität, da ein zäheres Medium, wie z.B. Schmierfett, nicht selbsttätig zu dem am Ende der Förderspindel vorgesehenen zweiten Förderorgan hin nachfliesst.

Mit der Bezeichnung "Reichert HD-Fettabschmiergerät" ist weiterhin eine Vorrichtung bekannt, die als Folgekolben ausgebildet ist, so dass sie sich mit ihrem gesamten Antriebsaggregat, bei zunehmender Entleerung des stationären Vorratsbehälters, in diesem bis zu dessen Boden absenkt. Die Belastung des Folgekolbens erfolgt durch das Gewicht der Vorrichtung und ist entsprechend begrenzt, jedoch bereitet das Gewicht der Vorrichtung Schwierigkeiten, wenn diese aus dem entleerten Behälter wieder herausgehoben werden soll.

Durch die FR—A—1 135 749 ist es weiterhin bekannt, die Oberseite eines Folgekolbens durch Druckluft zu belasten, deren Druck durch ein unterhalb oder neben dem Vorratsbehälter angeordnetes Pumpaggregat erzeugt wird. Das Medium wird durch dieses Pumpaggregat aus dem Vorratsbehälter herausgesaugt, so dass es eine verhältnismässig geringe Viskosität aufweisen muss. Eine Förderung aus einem Transport- und Lagerbehälter heraus ist mittels dieser Vorrichtung nicht möglich.

Der Erfindung liegt die Aufgabe zugrunde, eine Hochdruckfördervorrichtung der einleitend genannten Art zu finden, die aufgrund einer einfach und kostengünstig herstellbaren und damit kompakten und leichten Konstruktion die genannten Schwierigkeiten bewältigt und ausserdem verbesserte Fördereigenschaften bei erhöhter Zuverlässigkeit aufweist.

Die Lösung dieser Aufgabe erfolgt aufgrund der kennzeichnenden Merkmale des Patentanspruchs 1.

Die Förderung mittels der erfindungsgemässen Vorrichtung erfolgt somit mindestens zweistufig durch die kombinierte Wirkung zwischen einer Förderspindel und einer Kolbenpumpe, und das Medium lässt sich zuverlässig aus dem Vorratsbehälter heraus fördern. Ein wesentlicher konstruktiver Vorteil besteht darin, dass die Förderspindel und der Exzenter für den Antrieb der Kolbenpumpe mit gleicher und hoher Drehzahl angetrieben werden können, so dass eine direkte Kupplung, d.h. ohne Zwischenschaltung eines Reduktionsgetriebes, mit dem Elektromotor möglich ist, bei entsprechend geringem Gewicht der Vorrichtung. Da die Förderspindel bis an den Boden des Vorratsbehälters reicht, kann die Hochdruckfördervorrichtung fest relativ zu dem Vorratsbehälter montiert sein, im Gegensatz zu Vorrichtungen, die sich zusammen mit dem Folgekolben senken und eine Führung der von der Vorrichtung wegführenden Druckleitung erfordern, die diese Bewegung der Vorrichtung zulässt.

Aufgrund der Erfindung lassen sich besonders hochviskose Medien fördern, wie z.B. Schmierfett bei niedrigen Temperaturen.

In weiterer vorteilhafter Ausgestaltung der Erfindung ist am Ende einer von der Vorrichtung bzw. ihrem Förderaggregat wegführenden flexiblen Druckleitung ein Handgriff vorgesehen, durch den das geförderte Medium, wie z.B. Schmierfett, eine Dichtmasse, ein Klebemittel o.dgl. an die gewünschte Anwendungsstelle, z.B. einen Schmiernippel, herangeführt wird, und dieser Handgriff trägt ein Steuerorgan für die Aenderung der Drehzahl des Elektromotors sowie einen elektrischen Schalter für die Schaltung eines an der Druckleitung vorgesehenen Elektromagneten, der ein Ventil betätigt, das zwischen der Druck- und Saugeleitung der Hochdruckpumpe angeordnet ist. Auf diese Weise kann nach jedem Gebrauch des Mediums der Druck in der Druckleitung entspannt werden, so dass ein erneuter Gebrauch mit von Null an auf den für die Verbraucherstelle erforderlichen gesteuerten Druck des Mediums erfolgen kann. Dadurch wird ein schlagartiges Austreten mit einem nach Abstellen verbleibenden hohen Druck und Beschädigungen, z.B. an einem Schmiernippel, vermieden.

Um zu verhindern, dass der Elektromotor durch zu starke Druckentwicklung in der Druckleitung überlastet wird oder dass durch zu hohen Druck an der Anwendungsstelle eine Beschädigung auftritt, z.B. wenn ein Schmiernippel blockiert ist, hat eine weitere Ausführungsform der Hochdruckfördervorrichtung zwischen der Druck- und Saugeleitung der Hochdruckpumpe eine Ueberdruckventil. Da beide genannten Ventile, d.h. das Ventil für die vollständige Druckentlastung sowie das Ventil für die Ueberdruckentlastung in die Saugeleitung hinein öffnen, geht kein Teil des Mediums verloren, und es tritt keine Verschmutzung der Umgebung auf, wie z.B. bei der Schmierpistole gemäss der US—PS 4 062 425, und es ist kein zusätzlicher Auffangbehälter erforderlich, wie er gemäss der DE—OS 3 214 917 an einer Schmierpistole verwendet wird. Ausserdem ist im Handgriff kein Absperrventil gegen ein Nachfliessen von Medium erforderlich.

Bei Anwendung der erfindungsgemässen Hochdruckfördervorrichtung für die Schmierfettzufuhr zu dem Schmiernippel einer Schmierstelle, kann es vorkommen, dass aufgrund eines blockierten Schmiernippel trotz des hohen Schmierdruckes keine Schmierfettzufuhr zu der Schmierstelle erfolgt, ohne dass dies bemerkt werden kann. Durch die Rückförderung über das Ueberdruckventil in die Saugeleitung hinein, entsteht der

falsche Eindruck, dass Schmierfett zu der Schmierstelle gelangt sei. Zur Vermeidung dieses Nachteiles kann vorzugsweise in der Druckleitung der Hochdruckfördervorrichtung eine Einrichtung zum Strömungsnachweis vorgesehen sein, mit einem im Strömungskanal eines nichtmagnetischen Gehäuses der Einrichtung entgegen der Kraft einer Feder verschiebbar geführten Staukörper und einem Anzeigekörper, der in einer an der Aussenseite des Gehäuses vorgesehenen und parallel zum Strömungskanal verlaufenden Führung angeordnet ist, wobei der Anzeigekörper mit dem Staukörper durch eine Zwischenwand hindurch magnetisch gekoppelt ist, die sich zwischen der Führung und dem Strömungskanal befindet. Der Anzeigekörper dieser Einrichtung ist vorzugsweise eine in einer Gehäusenut geführte Stahlkugel, so dass diese durch Abrollen mit geringem Widerstand der Bewegung des Staukörpers folgen kann.

Weitere vorteilhafte Ausgestaltungen der Erfindung, wie z.B. die leicht herstellbare und raumsparende Anordnung der genannten Ventile, eines Entlüftungsventils, der zugehörigen Verbindungskanäle, eines Rückschlagventils, der Anschlussbohrung für die flexible Druckleitung sowie der Zylinderbohrung der Hochdruckkolbenpumpe in einem gemeinsamen Materialblock, mit zueinander parallel oder senkrecht verlaufenden Kanalbohrungen, können der folgenden Beschreibung einer Ausführungsform der Erfindung anhand der Zeichnungen entnommen werden.

Es zeigen:

Fig. 1 eine teilweise weggebrochene Schnittdarstellung der Hochdruckfördervorrichtung,

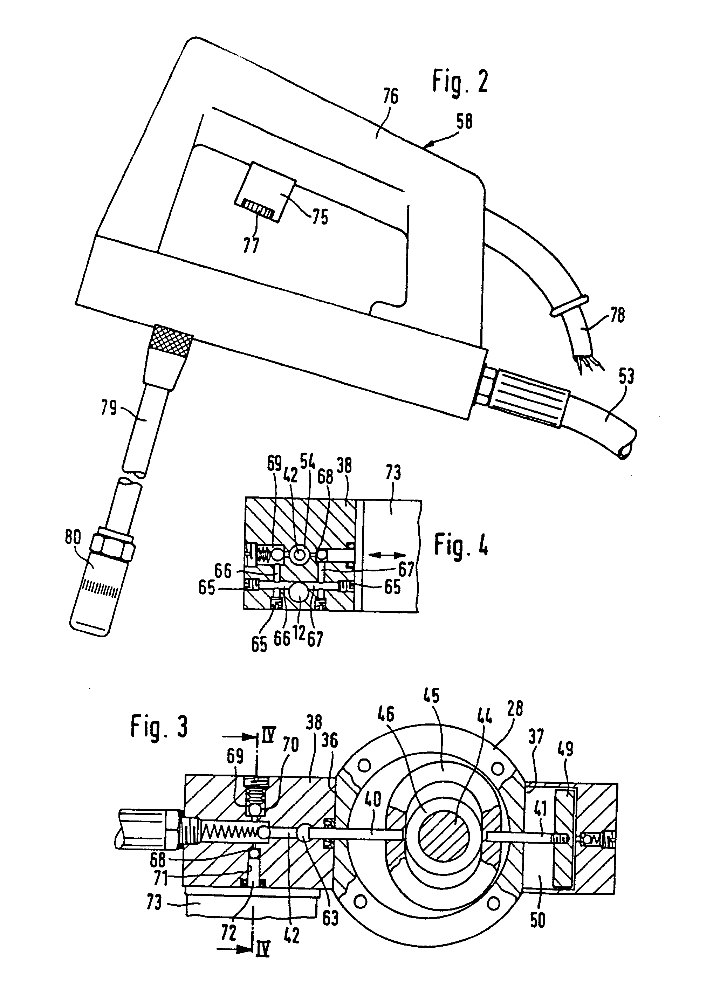

Fig. 2 eine Seitenansicht eines Handgriffes am Ende der flexiblen Druckleitung der Vorrichtung,

Fig. 3 einen Querschnitt entlang der Linie III—III der Fig. 1, jedoch mit anderer Position der Kolben,

Fig. 4 einen Querschnitt entlang der Linie IV—IV der Fig. 4,

Fig. 5 einen Axialschnitt durch eine Strömungsanzeigeeinrichtung,

Fig. 6 einen Axialschnitt durch das Gehäuse der Einrichtung nach Fig. 5,

Fig. 7 einen Querschnitt durch das Gehäuse entlang der Linie VII—VII der Fig. 6 und

Fig. 8 eine Aufsicht auf einen Teil des Gehäuses der Einrichtung nach Fig. 5 im Bereich der Führung für den Anzeigekörper.

Wesentliches Merkmal einer Vorrichtung ihrer Art ist die Förderung aus einem stationären Behälter 1 heraus, durch den Antrieb einer Fördereinrichtung mittels eines Elektromotors 2. Der stationäre oder fahrbare Vorratsbehälter 1 ist ein zylindrisches Blechgebinde, wie es für die Lagerung und den Transport des Mediums 3 mit standartisierten Abmessungen bekannt ist. Die Vorrichtung hat somit den Vorteil, dass ein Nachfüllen in einen der Vorrichtung eigenen Behälter nicht wie bei Handschmierpressen erforderlich ist.

Die Fördereinrichtung, d.h. das Pumpaggregat 4 mit zugehörigem Elektromotor 2, ist auf einem Deckel befestigt, der oberhalb des Vorratsbehälters 1, entweder unmittelbar an diesem oder an einem den Vorratsbehälter 1 umschliessenden Druckbehälter 6 befestigt ist.

Durch den Deckel 5 sowie einen mit dem Vorratsbehälter 1 zusammenwirkenden Folgekolben 7 hindurch erstreckt sich bis zum Behälterboden 8 ein starres Förderrohr 9, in dessen unterem Abschnitt eine Förderspindel 10 eingeschlossen ist. Die Förderspindel saugt das Medium 3 durch seitliche Oeffnungen 11 am freien Ende des Förderrohres 9 in dieses hinein und nach oben zur Saugleitung 12 der Kolbenpumpe 13. Zwischen dem schraubenlinienförmig verlaufenden Fördergang 14 und der Innenfläche des Förderrohres 9 ist ein ausreichendes Spiel 15 vorhanden, um den Förderdruck der Förderspindel auf z.B ca. 1 bar zu begrenzen und eine Ueberlastung des Elektromotors 2 oder eine Erhitzung des Mediums zu verhindern.

Der Folgekolben 7 ist mittels einer Führungshülse 16, in der ein Dichtring 17 eingeschlossen ist, auf dem Förderrohr 9 geführt und streift mit seiner äusseren Umfangsdichtung 18 die Innenfläche des Vorratsbehälters ab, so dass seine praktische vollständige Entleerung gewährleistet ist.

Der Folgekolben 7 liegt auf dem Medium 3 auf und folgt durch den aufgrund der Förderung entstehenden Unterdruck. Um auch die problemlose Förderung hochviskoser Medien zu ermöglichen, treibt der Elektromotor 2 zusätzlich zu der Kolbenpumpe 13 und der Förderspindel 10 eine Luftpumpe 20 an, die Luft über eine durch Strichlinien angedeutete Leitung 21 durch den Deckel 5 hindurch in den Behälterraum 22 oberhalb der Folgeplatte 7 leitet und diese mit Druck belastet. Bereits ein Ueberdruck von nur 0,1 bar erzeugt auf der Folgeplatte eine Kraft von mehr als 50 kp. Es versteht sich, dass der Deckel 5 hierfür fest und dicht am Druckbehälter befestigt ist, wie die Dichtung 23 und die teilweise sichtbare, unter den Randwulst 24 greifende Schraube 25 zeigen, von der mehrere vorhanden sind.

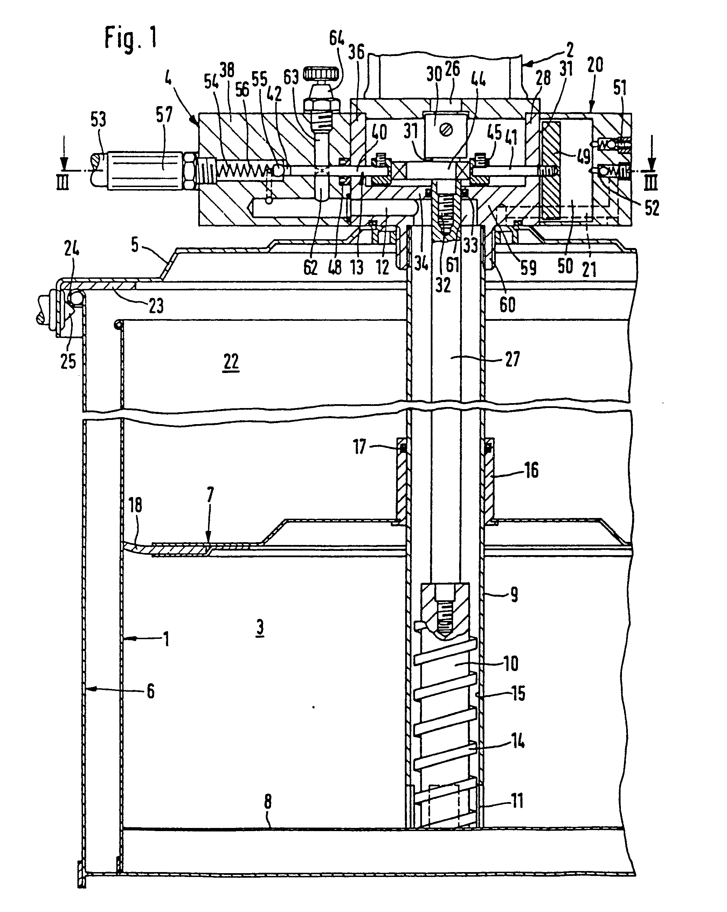

Der Elektromotor 2, der in der Fig. 1 nur teilweise sichtbar ist, entspricht einer handelsüblichen, beispielsweise für Handbohrmaschinen vorgesehenen Ausführung mit elektrisch stufenlos steuerbarer Drehzahl. Er ist mit seiner Welle 26 gleichachsig zu der Förderspindel 10 und deren Antriebswelle 27 und damit gleichachsig zu dem kreiszylindrischen Vorratsbehälter 1 an der Oberseite eines Antriebsgehäuses 28 befestigt, das seinerseits an dem Deckel 5 befestigt ist. Die Motorwelle 26 erstreckt sich in das Antriebsgehäuse 28 hinein und ist dort über eine Kupplungsmuffe 30 mit einer kurzen Exzenterwelle 31 verbunden, die die Verbindung zu den Antriebswelle 27 der Förderspindel herstellt, beispielsweise über einen Gewindezapfen 32, der in die Antriebswelle 27 gleichachsig eingeschraubt ist. Die Antriebswelle 27 verläuft durch eine Bohrung mit einer Dichtung 33 im Boden 34 des Antriebsgehäuses 28.

An zwei einander diametral gegenüberliegenden, achsparallelen äusseren Gehäuseabflachungen 36, 37 ist einerseits ein Gehäuseblock 38 und andererseits die Luftpumpe 20 flächig anliegend befestigt. Der stangenförmige Hochdruckkolben 40 der Kolbenpumpe 13 und die Kolbenstange 41 der als Kolbenpumpe ausgeführten Luftpumpe 20 erstrecken sich senkrecht zu diesen Gehäuseabflachungen 36, 37 aus dem Antriebsgehäuse 28 heraus in den zylinder 42 innerhalb des Gehäuseblocks, bzw. in den Zylinder 50 der Luftpumpe 20 hinein. Ihr Antrieb erfolgt gemeinsam, indem sie an einander gegenüberliegenden Längsseiten eines durch den Exzenter 44 der Exzenterwelle 31 hin- und herbewegten O-förmigen Hubringes 45 befestigt sind. Der Hubring 45 bewegt sich beidseitig durch seine starre Verbindung mit dem Hochdruckkolben 40 und der Kolbenstange 41 geradlinig geführt innerhalb des Antriebsgehäuses 28 hin- und her, während sich der Exzenter quer dazu mit einem ihn umschliessenden ringförmigen Kugellager 46 in dem Hubring hin- und herbewegt.

Die Abdichtung des Hochdruckkolbens 40 erfolgt durch eine Stangendichtung 48, die versenkt an der Seite des Gehäuseblocks eingesetzt ist, die an der Gehäuseabflachung 36 anliegt. Der Kolben 49 der Luftpumpe 20 hat hingegen nur eine Spaltdichtung mit dem Zylinder 50 und eine verhältnismässig kurzen Hub, so dass der erzeugte Luftdruck gering bleibt und keine massive Ausbildung des Druckbehälters 6 erfordert.

Die Steuerung des Ein- und Auslasses der Luftpumpe 20 erfolgt durch die Rückschlagventile 51 und 52.

Der aus einem massiven Metallblock ausgebildete Gehäuseblock 38 hat mehrere senkrecht zu seinen quaderförmig angeordneten Aussenflächen verlaufende Bohrungen, die Strömungskanäle für das Medium und Aufnahmeöffnungen für verschiedene Ventile bilden. Die Zylinderbohrung 42 der Hochdruckpumpe 13 mündet in die Druckleitungsbohrung 54 grösseren Durchmessers, in der das Pumpenrückschlagventil mit dem kugelförmigen Schliesskörper 55 und der Ventilfeder 56 eingeschlossen sind. In das äussere Ende der Druckleitungsbohrung 54 ist der Anschlussnippel 57 der zu dem Handgriff 58 führenden flexiblen Druckleitung 53 eingeschraubt. Die Saugleitung 12 der Hochdruckpumpe verläuft parallel zu der Zylinderbohrung 42 und der Druckleitungsbohrung 54 unter diesen zu dem vertikalen Förderrohr 9 und durchquert dabei einen Sockelteil 59 des Antriebsgehäuses 28. Dieser Sockelteil 59 setzt sich nach unten in einen Halsteil 60 fort, in den die vertikale Förderleitung 9 eingeschraubt ist und der seinerseits in den Deckel 5 des Druckbehälters eingeschraubt ist. Nach oben geht der Halsteil 60 in einen glockenförmigen Raum 61 über, in dem der Uebergang von der im Querschnitt grösseren Förderrohr 9 zu der Saugleitung 12 ventillos stattfindet.

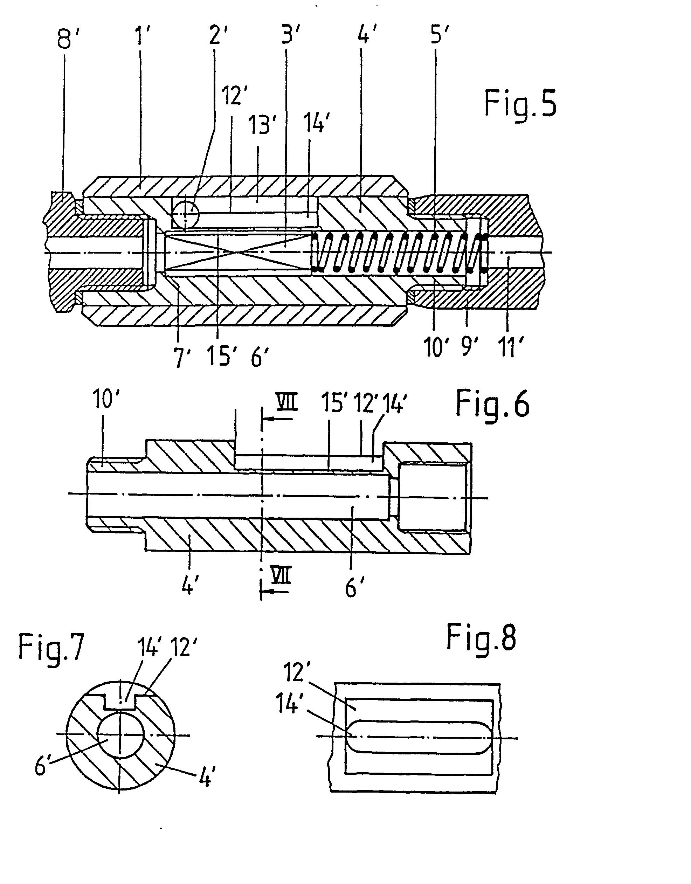

Ein rechtwinklig abzweigendes Verbindungsstück 62 der Saugleitung 12 mündet in die Zylinderbohrung 42 und setzt sich nach oben in eine Entlüftungsleitung 63 mit einem von Hand betätigbaren Entlüftungsventil 64 fort. Ausserdem ist die Saugleitung 12 über das abzweigende Verbindungsstück 62 hinaus verlängert bis zu einer zu ihr senkrechten Ebene, die die Druckleitungsbohrung schneidet und in der sich Verbindungsleitungen 66, 67 zwischen der Saugleitung 12 und der Druckleitungsbohrung 54 befinden, für die Zurückleitung des Mediums aus einem Druckentlastungsventil 68 in der Verbindungsleitung 67 und aus einem Ueberdruckventil 69 in der Verbindungsleitung 66, wie am besten die Fig. 4 zeigt. Für einen rechtwinkligen Verlauf dieser Verbindungsleitungen 66, 67 sind diese jeweils durch zwei sich kreuzende Bohrungen hergestellt, die nach aussen durch einen Gewindezapfen 65 verschlossen sind. Die Aufnahmebohrungen 54, 70, 71 für das Pumpenrückschlagventil (55, 56), das Druckentlastungsventil 68 und das Ueberdruckventil 69 befinden sich in einer gemeinsamen, horizontal verlaufenden Ebene. Deren Verschlusskörper ist jeweils durch eine Kugel gebildet, die durch eine Feder, bzw. einen Stössel 72 im Druckentlastungsventil 68, in Schliessposition gehalten sind. Der Stössel 72 ist durch einen seitlich am Gehäuseblock 38 befestigten Elektromagneten 73 entgegen dem Druck einer nichtdargestellten, mit dem Elektromagneten kombinierten Feder beweglich. Die Einschaltung des Elektromagneten 73, der in den Zeichnungen nur teilweise sichtbar ist, und damit das Schliessen des Druckentlastungsventils 68, erfolgt mittels der am Handgriff 58 vorgesehenen Schalteinrichtung 75.

Für die stufenlose Aenderung der Drehzahl des Elektromotors 20 und damit die Regulierung der Fördergeschwindigkeit in der Leitung 54 während der Aufbringung oder Zuführung des Mediums zu einer Anwendungsstelle, ist die Schalteinrichtung 75 als Schiebeschalter ausgeführt, der in den Griffbügel 76 eindrückbar ist. Für die Bereichsregulierung ist ausserdem am Schiebeschalter ein Einstellrad 77 vorhanden. Das elektrische Kabel 78 stellt die Verbindung zu dem Elektromotor 2 und zu dem Elektromagneten 73 her.

Der als Ausführungsbeispiel dargestellte Handgriff 58 ist für die Zufuhr von Schmiermittel zu einem Schmiernippel ausgeführt und hat hierfür einen Zuführstutzen 79 mit einer Ankupplungsmuffe 80. Für diese Anwendung beträgt der durch das Ueberdruckventil 69 bestimmte Maximaldruck beispielsweise 400 bar, obwohl durch die Vorrichtung noch höhere Drücke erzeugt werden könnten.

Die z.B. in der Druckleitung 53 angeordnete Einrichtung zum Strömungsnachweis hat einen kreiszylindrischen Gehäuseblock 4'. In der gleichachsig in ihm eingeschlossenen Bohrung 6' ist ein länglicher Staukörper 3' geführt, der in Längsrichtung an eine ebenfalls in dieser Bohrung 6' eingeschlossene Schraubenfeder 5' angrenzt. Um trotz der Führung des Staukörpers 3' in dieser Bohrung 6' eine Durchströmung der Vorrichtung zu ermöglichen, hat der Staukörper 3' eine andere äussere Querschnittsform als die den Strömungskanal der Vorrichtung bildende Bohrung 6'. Beispielsweise ist diese Querschnittsform des Staukörpers 3' quadratisch, mit einer diagonalen Abmessung gleich dem Bohrungsdurchmesser, so dass der Staukörper 3' an seinen vier Längskanten in der Bohrung 6' verschiebbar geführt ist. Es versteht sich, dass zwischen diesem diagonalen Mass und dem Bohrungsdurchmesser ein ausreichendes Toleranzmass vorhanden ist, um eine Gleitführung zu gewährleisten. Die Kanten des Staukörpers 3' sind vorzugsweise abgeflacht oder abgerundet. Auf der Zuströmseite des Staukörpers 3' liegt dieser in seiner Ausgangsposition unter dem Druck der Schraubenfeder 5' an einem Bohrungsabsatz 7' an, an dem die Bohrung 6' ihren Durchmesser leicht verringert, beispielsweise von 6 auf 5 mm.

An den beiden Enden des Gehäuseblocks 4' sind Anschlussgewinde für Verbindungsmuffen 8', 9' der Schlauchleitung einer Schmierpresse vorgesehen, wobei auf der Seite der Schraubenfeder 5' am Gehäuseblock ein Anschlussstutzen 10' mit einem Aussengewinde vorhanden ist, auf das die Verbindungsmuffe 9' aufgeschraubt ist. Der Durchströmungskanal 11' dieser Verbindungsmuffe 9' hat einen kleineren Durchmesser als die Schraubenfeder 5', so dass die aufgeschraubte Verbindungsmuffe die Schraubenfeder 5' unter Vorspannung in dem Gehäuseblock 4' einschliesst.

Wie am besten den Fig. 6 bis 8 zu entnehmen ist, hat der Gehäuseblock 4' über einen begrenzten Teil seiner Länge eine parallel zur Längsachse des Gehäuseblocks 4' verlaufende Abflachung 12', die im Querschnitt zum Umfang des Gehäuseblocks 4' eine Sekante bildet. Zwischen dieser Abflachung 12' und der Innenfläche einer auf den Gehäuseblock 4' aufgeschobenen Hülse 1', die mindestens im Bereich der Abflachung 12' durchsichtig ist, befindet sich ein Hohlraum 13' für die Aufnahme eines Anzeigekörpers 2'. Der Anzeigekörper besteht beispielsweise aus einer Stahlkugel 2', und für die Führung der Anzeigebewegung dieser Stahlkugel 2' befindet sich in der Abflachung eine Längsnut 14', deren Boden nur durch eine verhältnismässig dünne Zwischenwand 15' von der den Staukörper 3' einschliessenden Bohrung 6' getrennt ist. Diese Zwischenwand 15' besteht, ebenso wie der gesamte Gehäuseblock 4', aus einem nichtmagnetischen Material, wie z.B. Aluminium, und durch sie hindurch sind der Staukörper 3' und der Anzeigekörper 2' magnetisch miteinander gekoppelt, indem der Staukörper 3' und/oder der Anzeigekörper 2' aus magnetisiertem Material bestehen. Vorzugsweise besteht der Staukörper 3' aus einem Permanentmagneten und der Anzeigekörper 2' aus einer Stahlkugel. Für eine deutliche Anzeige der Position des Anzeigekörpers 2' ist der Boden der Längsnut 14' mit einer Farbe, beispielsweise Rot, versehen, die zur Farbe des Anzeigekörpers kontrastiert, und auch die Abflachung 12', die an die Längsnut angrenzt, ist vorzugsweise eingefärbt, unterschiedlich zur Farbe der Längsnut 14'.

Bei Durchströmung der Vorrichtung wird der Staukörper 3' durch den Staudruck der Strömung gegen die Schraubenfeder 5' gedrückt und entsprechend der Strömungsgeschwindigkeit entgegen ihre Federkraft verschoben. Dabei fliesst das Schmiermittel aussen an dem Staukörper 2' entlang. Durch die magnetische Kopplung führt der Anzeigekörper 2' um den gleichen Weg eine Positionsveränderung aus, die durch seine Ausführung als Kugel mit geringem Widerstand erfolgt. Somit ist die Durchströmung der Vorrichtung leicht erkennbar, und es ist sichergestellt, dass eine Schmierstelle tatsächlich mit Schmierfett versorgt wird.

Damit die Strömungsanzeige bereits bei geringen Strömungsgeschwindigkeiten erfolgt, hat die Schraubenfeder 5' vorzugsweise eine konische Form, d.h. progressive Charackteristik.

**Patentansprüche**

1. Hochdruckfördervorrichtung für die Förderung von viskosen bis hochviskosen Medien aus einem stationären oder fahrbaren Vorratsbehälter (1), mit mindestens zwei von einem gemeinsamen Elektromotor (2) angetriebenen, in Förderrichtung hintereinander angeordneten Förderorganen (10, 13), wobei der Elektromotor (2) oberhalb eines den Vorratsbehälter (1) verschliessenden Dekkels (5) befestigt ist und ein eine Förderspindel (10) umschliessendes Förderrohr (9) sich mit diesem, zentral von dem Deckel (5) bis in den Bodenbereich des Vorratsbehälters (1) erstreckt, dadurch gekennzeichnet, dass das Förderrohr (9) von einem Folgekolben (7) umschlossen ist und der Elektromotor (2) in Antriebsverbindung mit einer Luftpumpe (20) steht, deren Druckleitung (21) durch den Deckel (5) des Vorratsbehälters (1) hindurch in den Raum (22) oberhalb des Folgekolbens (7) mündet und,

daß das zweite Förderorgan eine Hochdruckkolbenpumpe (13) ist.

2. Vorrichtung nach Anspruch 1, dadurch gekennzeichnet, dass in Förderrichtung hinter der von einem Förderrohr (9) eingeschlossenen Förderspindel (10) die Hochdruck-Kolbenpumpe (13) vorgesehen ist, wobei die Antriebswelle der sich zum Boden des Vorratsbehälters erstreckenden Förderspindel (10) einen die Kolbenpumpe (13) antreibenden Exzenter (44) aufweist.

3. Vorrichtung nach Anspruch 2, dadurch gekennzeichnet, dass die Luftpumpe (20) eine Kolbenpumpe ist, deren Kolbenstange (41) mit dem auch die Hochdruck-Kolbenpumpe (13) antreibenden Exzenter (44) in Antriebsverbindung steht.

4. Vorrichtung nach Anspruch 2 oder 3, dadurch gekennzeichnet, dass die Kolbenpumpe (13) über eine flexible Druckleitung (53) mit einem Handgriff (58) für die Zuführung des geförderten Mediums zu einer Anwendungsstelle verbunden ist, wobei an dem Handgriff (58) eine Steuer- und Schalteinrichtung (75, 77) für die Aenderung der Drehzahl des Elektromotors (2) und das Ansteuern eines Elektromagneten (73) vorgesehen ist, der ein Druckentlastungsventil (68) betätigt, das sich in einer Verbindungsleitung (67) zwischen der Pumpendruckleitung (54) und der Pumpensaugleitung (12) befindet.

5. Vorrichtung nach einem der Ansprüche 1 bis 4, dadurch gekennzeichnet, dass in einer Verbindungsleitung (66) zwischen der Pumpendruckleitung (54) und der Pumpensaugleitung (12) ein Ueberdruckventil (69) vorgesehen ist.

6. Vorrichtung nach einem der Ansprüche 1 bis 5, gekennzeichnet durch ein auf einem den Vorratsbehälter (1) verschliessenden Deckel (5) befestigtes Antriebsgehäuse (28), mit einem in seinem Sockelteil (59) vorgesehenen glockenförmigen Verbindungsraum (61) zwischen dem nach unten wegragenden Förderrohr und dem quer zu diesem verlaufenden Pumpensaugrohr (12) und seitlichen Gehäuseflächen (36, 37), an denen einerseits ein Gehäuseblock (38) und andererseits eine Luftpumpe (20) befestigt ist, wobei der Exzenterantrieb mit einem Exzenter (44) und einem diesen umschliessenden O-förmigen Hubring (45) in diesem Antriebsgehäuse (28) eingeschlossen ist und der Elektromotor (2) an seiner Oberseite befestigt ist.

7. Vorrichtung nach einem der Ansprüche 1 bis 6, gekennzeichnet durch einen Gehäuseblock (38) mit Bohrungen, die den Zylinder (42) der Kolbenpumpe (13), deren Druckleitung (54) und Saugleitung (12), Verbindungsleitungen (66, 67) zwischen diesen Leitungen (54, 12), eine Entlüftungsleitung (63) und Aufnahmeöffnungen für Ventile (55, 64, 68, 69) in diesen Leitungen (54, 63, 66, 67) bilden.

8. Vorrichtung nach Anspruch 1, dadurch gekennzeichnet, dass in einer Verbindungsleitung (67) zwischen der Pumpendruck- und Saugleitung (54, 12) ein Druckentlastungsventil (68) vorgesehen ist.

9. Vorrichtung nach einem der Ansprüche 1 bis 8, gekennzeichnet durch eine in der Druckleitung (53, 79) vorgesehene Einrichtung zum Nachweis einer Durchströmung, mit einem im Strömungskanal (6') eines nichtmagnetischen Gehäuses (4') der Einrichtung entgegen der Kraft einer Feder (5') verschiebbar geführten Staukörper (3') und einem Anzeigekörper (2'), der in einer an der Aussenseite des Gehäuses (4') vorgesehenen und parallel zum Strömungskanal (6') verlaufenden Führung (12'–14') angeordnet ist, wobei der Anzeigekörper (2') mit dem Staukörper (3') durch eine Zwischenwand (15') hindurch magnetisch gekoppelt ist, die sich zwischen der Führung (12'—14') und dem Strömungskanal (6') befindet.

10. Vorrichtung nach Anspruch 9, dadurch gekennzeichnet, dass der Anzeigekörper aus einer Kugel (2') und die Führung aus einer Nut (14') besteht, wobei das Gehäuse (4') von einem die Nut (14') radial nach aussen verschliessenden Mantelkörper (1') umschlossen ist, der zumindest im Bereich der Nut (14') aus durchsichtigem Material besteht.

11. Vorrichtung nach Anspruch 9 oder 10, dadurch gekennzeichnet, dass der Strömungskanal aus einer kreiszylindrischen Bohrung (6') besteht und der Staukörper (3') mindestens drei Längskanten aufweist, durch die er an der Wand der Bohrung (6') geführt ist.

## Revendications

1. Dispositif de pompage haute pression, pour l'expédition de produits visqueux à hautement visqueux à partir d'un récipient de stockage (1) fixe ou déplaçable, comportant au moins deux organes de pompage (10, 13) disposés l'un derrière l'autre dans le sens de pompage, et entraînés par un moteur électrique commun (2), le moteur électrique (2) étant fixé au-dessus d'un couvercle (5) fermant le récipient de stockage (1) et un tuyau de refoulement (9) entourant une vis de refoulement (10) s'étendant, avec ce dernier, du couvercle (5) jusque dans la zone du fond du récipient de stockage (1), en position centrale, caractérisé en ce que le tuyau de refoulement (9) est entouré par un piston suiveur (7) et en ce que le moteur électrique (2) est relié à entraînement avec une pompe à air (20) dont la conduite de pression (21) débouche au travers du couvercle (5) du récipient de stockage (1) dans le volume (22) au dessus du piston suiveur (7) et en ce que le deuxième organe de pompage (13) est une pompe à piston à haute pression.

2. Dispositif suivant la revendication 1, caractérisé en ce que la pompe à piston à haute pression (13) est prévue, dans le sens de pompage, derrière la vis de refoulement (10) placée à l'intérieur d'un tuyau de refoulement (9), étant entendu que l'arbre d'entraînement de la vis de refoulement (10) s'étendant jusqu'au fond du récipient de stockage présente un excentrique (44) entraînant la pompe à piston (13).

3. Dispositif suivant la revendication 2, caractérisé en ce que la pompe à air (20) est une pompe à piston, dont la tige de piston (41) est reliée à entraînement avec l'excentrique (44) entraînant également la pompe à piston (13).

4. Dispositif suivant la revendication 2 ou la revendication 3, caractérisé en ce que la pompe à piston à haute pression (13) est reliée, par l'intermédiaire d'une conduite de pression flexible (53), comportant une poignée (58), pour envoyer le fluide pompé vers un point d'utilisation, tandis qu'un dispositif comprenant commande et interrupteur (75, 77) est prévu sur la poignée (58) pour faire varier la vitesse de rotation du moteur électrique (2) et la mise en service d'un électroaimant (73) actionnant une soupape de décharge de pression (68) qui se trouve dans une conduite de raccordement (67) entre la conduite de refoulement des pompes (54) et la conduite d'aspiration des pompes (12).

5. Dispositif suivant l'une quelconque des revendications 1 à 4, caractérisé en ce que, dans une conduite de raccordement (66), une soupape de détente de pression (69) est prévue entre la conduite de refoulement des pompes (54) et la conduite d'aspiration des pompes (12).

6. Dispositif suivant l'une quelconque des revendications 1 à 5, caractérisé par un boîtier d'entraînement (28) fixé sur le couvercle (5) fermant le récipient de stockage (1) et comportant un volume de liaison (61), en forme de cloche, prévu dans la pièce de socle (59) du boîtier d'entraînement, entre le tuyau de circulation du fluide dépassant vers le bas et le tuyau d'aspiration de la pompe (12) disposé perpendiculairement à ce dernier, et comportant des surfaces latérales de boîtier (36, 37), sur les côtés desquelles sont fixés, d'un côté, un bloc boîtier (38) et, de l'autre côté, une pompe à air (20), tandis que l'entraînement à excentrique, comportant un excentrique (44) et une bague d'excentrique (45) en forme de O, entourant celui-ci, sont enfermés dans ce boîtier d'entraînement (28) et que le moteur électrique (2) est fixé sur sa face supérieure.

7. Dispositif suivant l'une quelconque des revendications 1 à 6, caractérisé par un bloc boîtier (38) comportant des alésages qui forment le cylindre (42) de la pompe à piston (13), sa conduite de refoulement (54) et sa conduite d'aspiration (12), des conduites de raccordement (66, 67) entre ces conduites (54, 12) une conduite d'évacuation d'air (63) et des ouvertures pour recevoir des soupapes (55, 64, 68, 69) dans ces conduites (54, 63, 66, 67).

8. Dispositif suivant la revendication 1, caractérisé en ce qu'une soupape de décharge de pression (68) est prévue dans une conduite de raccordement (67) entre la conduite de refoulement (54) et la conduite d'aspiration (12).

9. Dispositif suivant l'une quelconque des revendications 1 à 8, caractérisé par une installation prévue dans la conduite de refoulement (53, 79) pour indiquer un courant de fluide, comportant, dans le canal d'écoulement (6') d'un boîtier amagnétique (4') de l'installation, un corps de fermeture (3') guidé, pouvant coulisser en s'opposant à la force d'un ressort (5'), et un organe indicateur (2'), qui est disposé dans un guidage (12'—14') prévu sur la face externe du boîtier (4') et s'étendant parallèlement au canal d'écoulement (6'), l'organe indicateur (2') étant couplé magnétiquement avec le corps de fermeture (3') au travers d'une paroi intermédiaire (15') qui se trouve entre le guidage (12'—14') et le canal d'écoulement (6').

10. Dispositif suivant la revendication 9, caractérisé en ce que l'organe indicateur est constitué d'une bille (2') et le guidage d'une rainure (14'), le boîtier (4') étant entouré par un manteau externe (1') qui ferme radialement, vers l'extérieur, la rainure (14'), et qui est constitué, au moins dans la zone de la rainure (14'), d'un matériau transparent.

11. Dispositif suivant la revendication 9 ou la revendication 10, caractérisé en ce que le canal d'écoulement est constitué d'un alésage cylindrique circulaire (6') et en ce que le corps de fermeture (3') présente au moins trois arêtes longitudinales par lesquelles le canal est guidé sur la paroi de l'alésage (6').

**Claims**

1. High pressure conveying device for conveying viscous to highly viscous media from a stationary or movable storage tank (1), with at least two conveying members (10, 13) successively arranged in the conveying direction and driven by a common electric motor (2), the latter being fixed above a cover (5) closing the storage tank (1) and a conveying pipe (9) surrounding a conveying spindle (10) extending therewith centrally from the cover (5) into the bottom region of the storage tank (1), characterized in that the conveying pipe (9) is surrounded by a follow-up piston (7) and the electric motor (2) is in driving connection with an air pump (20), whose pressure line (21) issues through the cover (5) of storage tank (1) into the area (22) above the follow-up piston (7) and that the second conveying member is a high pressure piston pump (13).

2. Device according to claim 1, characterized in that the high pressure piston pump (13) is located in the conveying direction behind the conveying spindle (10) surrounded by a conveying pipe (9), the driving shaft of the conveying spindle (10) extending to the bottom of the storage tank having an eccentric (44) driving the piston pump (13).

3. Device according to claim 2, characterized in that the air pump (20) is a piston pump, whose piston rod (41) is in driving connection with the eccentric (44) also driving the high pressure piston pump (13).

4. Device according to claims 2 or 3, characterized in that the piston pump (13) is connected via a flexible pressure line (53) to a handle (58) for the supply of the conveyed medium to a usage point, the handle (58) carrying a control and switching means (75, 77) for modifying the speed of the electric motor (2) and the control of an electromagnet (73), which operates a pressure relief valve (68), which is located in a drive line (67) between the pump pressure line (54) and the pump suction line (12).

5. Device according to one of the claims 1 to 4, characterized in that an excess pressure valve (69) is provided in a connecting line (66) between the pump pressure line (54) and the pump suction line (12).

6. Device according to one of the claims 1 to 5, characterized by a drive casing (28) fixed to a cover (5) closing the storage tank (1) and having a bell-shaped connecting area (61) located in its base part (59) and positioned between the downwardly projecting conveying pipe and the pump suction pipe (12) at right angles thereto and lateral casing faces (36, 37) to which is fixed on the one hand a casing block (38) and on the other an air pump (20), the eccentric drive with an eccentric (44) and an O-shaped lifting ring (45) surrounding the same being enclosed in said drive casing (28) and the electric motor (2) is fixed to its top.

7. Device according to one of the claims 1 to 6, characterized by a casing block (38) with bores forming the cylinder (42) for piston pump (13), its pressure line (54) and suction line (12), connecting lines (66, 67) between said lines (54, 12), a vent line (63) and reception openings for valves (55, 64, 68, 69) in said lines (54, 63, 66, 67).

8. Device according to claim 1, characterized in that a pressure relief valve (68) is provided in a connecting line (67) between the pump pressure and suction line (54, 12).

9. Device according to one of the claims 1 to 8, characterized by a mechanism provided in the pressure line (53, 79) for the detection of a through-flow, with a baffle body (3') displaceably guided in the flow channel (6') of a nonmagnetic casing (4') of the mechanism counter to the tension of a spring (5') and an indicator body (2') located in a guide (12'—14') running parallel to the flow channel (6') and provided on the outside of casing (4'), the indicator body (2') being magnetically coupled to the baffle body (3') through a partition (15') located between the guide (12'—14') and the flow channel (6').

10. Device according to claim 9, characterized in that the indicator body comprises a ball (2') and the guide a groove (14') the casing (4') being surrounded by a jacket body (1') radially outwardly closing the groove (14') and which is made from transparent material at least in the vicinity of groove (14').

11. Device according to claims 9 or 10, characterized in that the flow channel comprises a circular cylindrical bore (6') and the baffle body (3') has at least three longitudinal edges guiding it on the wall of bore (6').

Fig. 1

EP 0 196 471 B1

Fig. 2

Fig. 4

Fig. 3

Fig.5

Fig.6

Fig.7

Fig.8